# EUROPEAN PATENT APPLICATION

(11) **EP 1 729 538 A1**
(43) Date of publication of application: **06.12.2006**
(21) Application number: 04807001.5
(22) Date of filing: 14.12.2004
(51) Int. Cl.: H04R 1/00, H04R 1/02, H04M 1/00, H04M 1/02

(54) **ACOUSTIC APPARATUS USING BONE-CONDUCTION SPEAKER**

(30) Priority: 26.12.2003 JP 2003432411
(71) Applicant: Temco Japan Co., Ltd., Tokyo (JP)
(72) Inventor: TAKEI, Ryuichi, c/o TEMCO JAPAN CO., LTD., Tokyo 168-0062 (JP)
(74) Representative: Bentz, Jean-Paul
(86) International application number: PCT/JP2004/018640
(87) International publication number: WO 2005/067339

(57) **Abstract**

An acoustic apparatus using a bone-conduction speaker can eliminate a sound pressure type speaker heretofore required and permit a bone-conduction speaker to serve both in communication and in outputting an incoming tone, thus reducing the apparatus in size and weight. The apparatus comprises: an outer casing (3), in which a bone-conduction speaker is incorporated; a unit case (1) mounted in the outer casing (3) through a support means (4); a drive means (5) for displacing the unit case (1) in the outer casing (3), the drive means (5) being disposed in the outer casing (3); an opening formed in the outer casing (3) in a manner such that the unit case (1) is permitted to have its side-head abutting surface (2) exposed to the outside, wherein the drive means (5) is so operated as to have the unit case (1) brought into or out of contact with the outer casing (3) .

## Description

### Technical Field:

The present invention relates to an acoustic apparatus using a bone-conduction speaker, and more particularly to an acoustic apparatus using a bone-conduction speaker adapted for use with a cell phone of bone-conduction speaker type and the like.

### Background Art:

Although a cell phone carrying a bone-conduction speaker as its communication speaker is convenient for a user since it is possible for the user to catch a voice sound in communication even in a high-noise environment and like environments, it is necessary for such a cell phone to carry a soundpressure type speaker for outputting an incoming tone and the like in addition to the bone-conduction speaker. As described above, it is necessary for the conventional cell phone to carry two different types of speakers at the same time. This is a serious problem in reducing such an acoustic apparatus both in size and in weight. Patent document 1: Japanese Patent application Laid-Open No. 2003-348208

### DISCLOSURE OF THE INVENTION

### PROBLEMS TO BE SOLVED BY THE INVENTION

Consequently, it is an object of the present invention to provide an acoustic apparatus using a bone-conduction speaker, wherein the apparatus is capable of eliminating a sound pressure type speaker having been additionally required for a conventional acoustic apparatus using the bone-conduction speaker, and enables a bone-conduction speaker to serve both in communication and in outputting an incoming tone, thus reducing the apparatus in size and weight.

### MEANS FOR SOLVING THE PROBLEMS

In the present invention, the above problems is solved by providing an acoustic apparatus using a bone-conduction speaker comprising: an outer casing, in which a bone-conduction speaker is incorporated; a unit case mounted in the outer casing through a support means; a drive means for displacing the unit case in the outer casing, the drive means being disposed in the outer casing; an opening formed in the outer casing in a manner such that the unit case is permitted to expose its side-head abutting surface to the outside, wherein the drive means is so operated as to bring the unit case into or out of contact with the outer casing.

The outer casing may be constructed of a casing of a cell phone or of an accessory type of casing, which type is capable of being attached to a user's breast portion and like portion, wherein the accessory type of casing is provided with a communication means capable of communicating with the cell phone. Further, the communication means may be constructed of a wire communication means or a wireless communication means.
Preferably, the unit case is always kept in contact with the outer casing whenever the unit case is on standby.

The unit case takes a convex shape, an upper surface of which shape serves as the side-head abutting surface to project outside through the opening of the outer casing. In operation, the drive means moves back and forth in a manner such that the abutting surface of the unit case projects outside through the opening of the outer casing whenever the drive means moves forth. Further, in operation, the outer casing permits a microphone to be pulled out of the outer casing; and, the drive means is interlocked with the microphone whenever the microphone is pulled out, whereby the unit case is brought out of contact with the outer casing.

### EFFECT OF THE INVENTION

In the acoustic apparatus of the present invention using the bone-conduction speaker, when a phone call is received in the apparatus during standby, the bone-conduction speaker is operated to vibrate the unit case, which is kept in contact with the bone-conduction speaker, whereby pneumatic vibration sounds or sound waves are produced. In other words, upon receipt of the phone call, the bone-conduction speaker functions as a vibrator in a condition in which the unit case issues pneumatic vibration sounds or sound waves. As described above, in the present invention, it is possible for only the bone-conduction speaker to output a voice sound in communication and also output an incoming tone and the like, which does not require any sound-pressure type of speaker to make it possible for the apparatus to be reduced both in size and in weight.

### BRIEF DESCRIPTION OF THE DRAWING

[Fig. 1] is a view showing an embodiment of the acoustic apparatus using the bone-conduction speaker according to the present invention.
[Fig. 2] is a view showing another embodiment of the acoustic apparatus using the bone-conduction speaker according to the present invention.
[Fig. 3] is a view showing a still another embodiment of the acoustic apparatus using the bone-conduction speaker according to the present invention.

### EST MODE FOR CARRYING OUT THE INVENTION

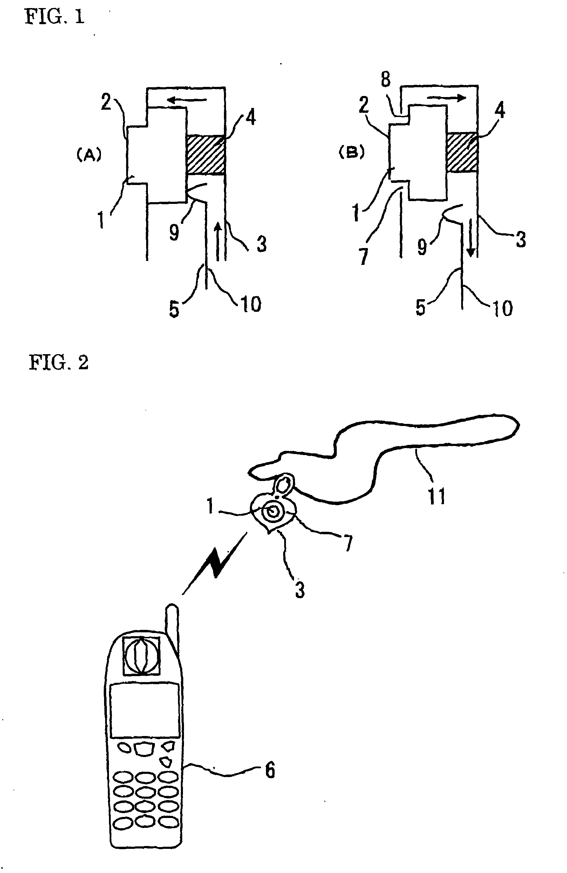

With reference to the accompanying drawings, preferred embodiments of the present invention will be described. Fig. 1 is a view showing the present invention in essential construction and operation thereof. An acoustic apparatus using a bone-conduction speaker according to the present invention has a construction comprising an outer casing 3, mounted in which are: a unit case 1 in which a bone-conduction speaker is incorporated; a support means for supporting the unit case 1 inside the outer casing 3; and, a drive means 5 for displacing the unit case 1 inside the outer casing 3.

Although the unit case 1 shown in the drawings assumes a convex shape having its upper surface formed into a side-head abutting surface 2, which abuts against a side head portion of a user in use, it is also possible for the unit case 1 to assumes any other suitable shape other than the convex shape. In other words, there is no need of limiting the unit case 1 in shape to the convex shape.

The outer casing 3 may be constructed of a casing of a cell phone itself. It is also possible for the outer casing 3 to be constructed of an accessory type of casing other than the casing of the cell phone 6, provided that the accessory type of casing is provided with a transmitting and receiving means, and capable of being communicated with the cell phone 6 (see Fig. 2).

In the latter case, preferably the outer casing 3 assumes an ornamental appearance in use, for example: it is possible for the outer casing 3 to be suspended from an ornamental chain 11 as is in a pendant and a brooch to decorate a breast portion of the user. Further, it is also possible for the outer casing 3 to be attached to a breast pocket of the user through a hook and like fastening means in ornamental use (see Fig. 2) . Although communicationbetween the cell phone 6 and the outer casing 3 is realized through a wire means, it is preferable that the communication is realized through a wireless means such as "Bluetooth" and like wireless or radio communication means. Further appropriately incorporated in the outer casing 3 are a microphone portion, a battery and like components.

Formed in the outer casing 3 is an opening 7, which assumes a suitable shape to accommodate oneself to the corresponding shape of the unit case 1. In use, this opening 7 permits the side-head abutting surface 2 of the unit case 1 to be projected and exposed to the outside of the outer casing 3. The unit case 1 has its portion, that is, its rear shoulder portion 8 kept in contact with an inner edge portion of the opening 7 during standby (see Fig. 1(A)) under the effect of the drive means 5 which will be described in detail later. On the other hand, during communication, the unit case 1 has its rear shoulder portion 8 kept out of contact with the inner edge portion of the opening 7.

The support means 4 is fixedly mounted on an inner surface of the outer casing 3 to movably support the unit case 1 relative to the outer casing 3. Due to this, the support means 4 is constructed of an elastic block, a spring and like resilient member made of plastics, rubber and like elastic materials excellent in resiliency and in damping properties. The support means 4 functions to keep the unit case 1 apart from the outer casing 3 at a time when the unite case 1 is free from the influence exerted by the drive means 5.

The drive means 5 functions to displace or move the unit case 1 having been kept apart from the outer casing 3 to a position where the unit case 1 is brought into contact with the outer casing 3. The drive means 5 is capable of having any desired construction. For example, it is possible for the drive means 5 to have a construction in which: a drive arm 10 provided with a push-up portion 9 assuming a parabolic shape in its front end portion is pivotally mounted in the outer casing 3 and permitted to be moved up and down from the outside of the outer casing 3.

In the case of construction described above, when the drive arm is moved up and down from the outside of the outer casing 3, the push-up portion 9 formed in the front end portion of the drive arm abuts against a bottom portion of the unit case 1 to push up the bottom portion, whereby the unit case 1 is brought into contact with the outer casing 3 (Fig. 1(A)). Incidentally, at this time, in order to prevent the unit case 1 from tilting over, a suitable guide is properly provided to support the unit case 1 in operation. Further, when the slide button is returned to its initial position, the unit case 1 also returns to its initial position where the unit case 1 is kept apart from the outer casing 3 (Fig. 1(B)).

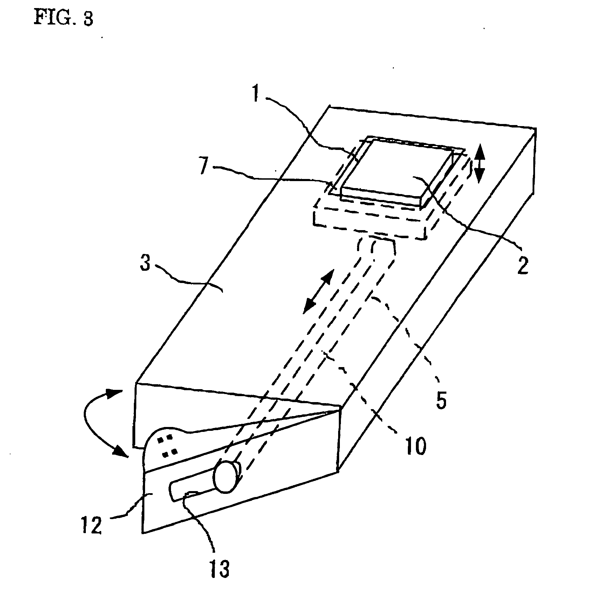

In the embodiment shown in Fig. 3, it is possible to pull a microphone portion 12, in which a microphone is incorporated, out of the outer casing 3. In the embodiment shown here, the microphone portion 12 has its end portion pivoted to the outer casing 3 in a manner such that the microphone portion 12 is capable of being pulled out of the outer casing 3 when the microphone portion 12 is swung out of the outer casing 3. In this case, for example, it is possible to have an end portion of the drive arm 10 engaged with an elongated hole 13 of the microphone portion 12. As a result, when the microphone portion 12 is pulled out of the outer casing 3 in use, the drive arm 10 is extended outward to permit communication. On the other hand, when the microphone portion 12 is retracted and returned to its initial position, the drive arm 10 is moved back, which makes it possible to keep the apparatus in the standby mode.

Now, the acoustic apparatus using the bone-conduction speaker of the present invention will be described in operation, First of all, the acoustic apparatus using the bone-conduction speaker of the present invention having been incorporated in a cell phone will be described, (wherein the outer casing 3 forms a casing of the cell phone). In this case, when an incoming signal or phone call is received in the cell phone, the incoming signal is amplified in a speaker control circuit of the cell phone to drive the bone-conduction speaker to inform the user of receipt of the incoming signal. More specifically, the unit case 1 contained in the bone-conduction speaker vibrates. As already described in the above, since the unit case 1 is kept in contact with the outer casing 3 during standby under the influence exerted by the drive means 5 (Fig. 1 (A)), the vibrations of the unit case 1 are transmitted to the outer casing 3 to vibrate the outer casing 3 as a whole. As a result, pneumatic vibration sounds or sound waves thus intensified in loudness are generated so that the cell phone issues a predetermined incoming tone thus intensified to the outside.

When the user makes an appropriate response to the incoming tone by pushing a push button and like means, a communication link is established to permit a voice sound signal is outputted to the speaker control circuit, so that the bone-conduction speaker serving as a communication speaker is actuated, which makes it possible for the user to catch the bone-conduction voice sound when the speaker is abutted against the side head portion of the user around his or her ear.

At this time, when the user operates the cell phone to respond to the phone call, the drive means 5 moves back so as to be separated from the unit case 1. As a result, the unit case 1 is separated from the outer casing 3 (Fig. 1(B)), so that intensification of the incoming tone in loudness issued from the cell phone ends. After that, when the user operates the cell phone to close or break the communication link, the cell phone ends its communication session and returns to its standby mode. When the drive means 5 is moved upward, the unit case 1 is brought into contact with the outer casing 3 again, and keeps on contacting the outer casing 3 (Fig. 1(A)).

Incidentally, it is possible for the cell phone to inform the user of the incoming call through such intensification means using vibrations described above. In addition to the use of vibrations, it is also possible for the cell phone to use light in informing the user of the incoming call. Further, it is also possible for the user to adjust each of the incoming tone thus intensified in loudness and any voice sound in communication in volume by operating a button and like means provided in the cell phone.

In the above embodiments, upon receipt of the incoming signal, the user operates the cell phone to respond to the incoming signal to establish a communication link. When the communication link is established, the drive means 5 is moved *downward and* separated from the unit case 1. On the other hand, when the communication link is closed or broken, the drive means 5 is moved upward and brought into contact with the unit case 1 to exert its influence on the unit case 1. The drive means 5 is not limited to the above operation in its motion timing. For example, it is also possible for the cell phone to be of a foldable type. In this case, when the user folds and opens the cell phone of the foldable type, the drive means 5 is moved back and forth so as to be separated from and brought into contact with the unit case 1, for example.

Also in the case where the outer casing 3 is not constructed of the casing of the cell phone, the unit case 1 keeps on contacting the outer casing 3 during standby. Upon receipt of a phone call or incoming signal in the cell phone, such incoming signal is transmitted to a receiving means of the outer casing 3 through a wire or a wireless communication means. This actuates the bone-conduction speaker so that the unit case 1 is vibrated. Such vibrations of the unit case 1 are transmitted to the outer casing 3 in which the vibrations or incoming tone is intensified in loudness, whereby the incoming tone thus intensified in loudness is issued from the outer casing 3 to the outside as sound waves.

After that, when the user operates the drive means 5 of the outer casing 3 to have the unit case 1 separated from the outer casing 3, it is possible for the user to catch a bone-conduction sound by abutting his or her side head portion against the side-head abutting surface 2 of the unit case 1.

Incidentally, it is also possible for the user to catch both the incoming tone and the communication voice sound as pneumatic vibration sound even in a condition in which the unit case 1 keeps on contacting the outer casing 3. In this case, in order to reduce "howling", a microphone circuit is kept in the OFF position. In this case, it is also possible to incorporate a howling-reduction circuit and like circuits in the cell phone. This makes it possible for the user to use the cell phone thus modified as a speaker phone, wherein the howling reduction circuit and the like having been incorporated in the cell phone.

## Claims

1. An acoustic apparatus using a bone-conduction speaker comprising: an outer casing, in which a bone-conduction speaker is incorporated; a unit case mounted in said outer casing through a support means; a drive means for displacing said unit case in said outer casing, said drive means being disposed in said outer casing; an opening formed in said outer casing in a manner such that said unit case is permitted to expose its side-head abutting surface to the outside, wherein said drive means is so operated as to bring said unit case in or out of contact with said outer casing.

2. The acoustic apparatus using the bone-conduction speaker as set forth in claim 1, wherein said outer casing is constructed of a casing of a cell phone.

3. The acoustic apparatus using the bone-conduction speaker as set forth in claim 1, wherein said outer casing is constructed of an accessory type of casing, which type is capable of being attached to a user's breast portion and like portions, wherein said accessory type of casing is provided with a communication means capable of communicating with said cell phone.

4. The acoustic apparatus using the bone-conduction speaker as set forth in claim 3, wherein said communication means is constructed of a wireless communication means.

5. The acoustic apparatus using the bone-conduction speaker as set forth in any one of claims 1 to 4, wherein said unit case is always kept in contact with the outer casing when said unit case is on standby.

6. The acoustic apparatus using the bone-conduction speaker as set forth in any one of claims 1 to 5, wherein said unit case takes a convex shape, an upper surface of which shape serves as said abutting surface to project outside through said opening of said outer casing.

7. The acoustic apparatus using the bone-conduction speaker as set forth in any one of claims 1 to 6, wherein said drive means moves back and forth in a manner such that said abutting surface of said unit case projects outside through said opening of said outer casing when said drive means moves forth.

8. The acoustic apparatus using the bone-conduction speaker as set forth in any one of claims 1 to 7, wherein: said outer casing permits a microphone to be pulled out of said outer casing; and, said drive means is interlocked with said microphone when said microphone is pulled out, whereby said unit case is brought out of contact with said outer casing.

9. The acoustic apparatus using the bone-conduction speaker as set forth in any one of claims 1 to 8, wherein said support means is constructed of an elastic member fixedly mounted on an inner surface of said outer casing.
